# EUROPEAN PATENT SPECIFICATION

(11) **EP 0 456 657 B1**
(45) Date of publication and mention of the grant of the patent: **23.03.1994**
(21) Application number: 90901925.9
(22) Date of filing: 12.01.1990
(51) Int. Cl.: A01B 73/02, A01B 29/00

(54) **TRANSPORT DEVICE FOR A SECTIONED IMPLEMENT**
TRANSPORTVORRICHTUNG FÜR UNTERTEILTE GERÄTE
DISPOSITIF DE TRANSPORT POUR ENGIN DIVISE EN SECTIONS

(30) Priority: 18.01.1989 SE 8900159
(43) Date of publication of application: 21.11.1991
(73) Proprietor: OLSSON, Lars Anders, 641 97 Katrineholm (SE)
(72) Inventor: OLSSON, Lars Anders, 641 97 Katrineholm (SE)
(86) International application number: SE9000022
(87) International publication number: WO9007867

(56) References cited:
- WO-A-88/04134
- SE-B- 427 887
- US-A- 3 401 752

## Description

The present invention relates to an arrangement for converting a tractor-drawn roller for compacting ground in agriculture from its working position to a position more suitable for rapid transportation on roads, and for reconverting said roller to the working position.

The figures required for describing the invention are
Fig. 1, which shows a previously known roller provided with a converting arrangement for rapid transportation on roads;
Fig. 2, which shows a previously known roller without corresponding converting arrangements;
Fig. 3, which shows a roller provided with a converting arrangement according to the invention in the working position;
Fig. 4, which shows the same roller as in Fig. 3 in the transport position.

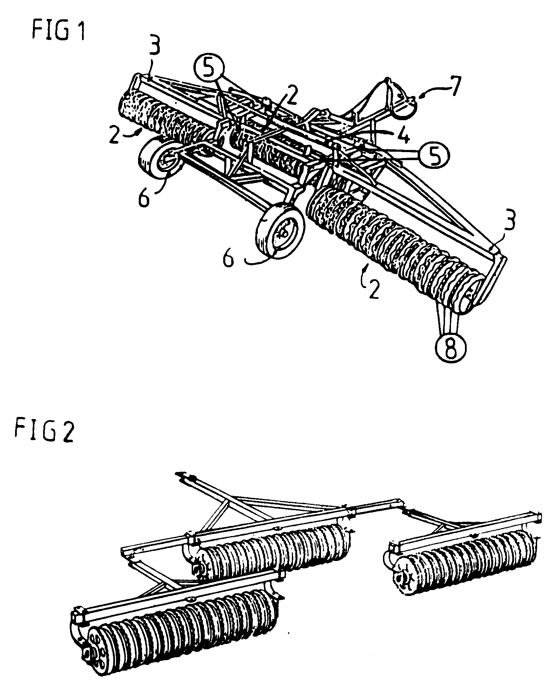

As can be seen from the figures, both rollers with converting arrangements for transport and rollers entirely without any such arrangement have been known previously. With all previously known cases of covnverting arrangements for transport the roller is subdivided into three or several roller sections movable in relation to one another, as disclosed, for example, in documents SE-B-427 887. This is so, on the one hand, in order to impart to the roller while it is at work a high degree of adaptability to the ground, while, on the other hand, enabling it to be folded up to a certain extent for transportation on roads. An example of such a roller is shown in Fig. 1, where the three roller sections (2) are mounted within a framework, the outer ends (3) of which can be folded upward by means of hydraulic cylinder (4) and hinges (5) so as to considerably reduce the overall width of the roller. With all previously known rollers with converting arrangement it is generally the case that the conversion takes place in two stages, i.e. a first stage in which the roller is raised, with the aid of hydraulic power from the tractor, on wheels specially intended for transportation (in the example 6). And another stage consists in reducing the overall width of the roller by moving the outer ends of the outer roller sections upward, to the rear or forward, in the direction towards the vertical centre plane of the implement, using to this end hydraulic power from the tractor, the tractive force of the tractor, a cable winch etc.

As can be partly seen from Fig. 1, the actual working devices of a roller (roller sections 2) consist of a number of cast-iron rings (8) mounted on a shaft so as to form a heavy roller rolling on the ground.

A roller without converting arrangement for transport, Fig. 2, is therefore a technically speaking very simple implement, as a result of which the investment required for designing just the converting arrangement, where such an arrangement exists, is high by comparison with that for the roller itself. The commercial consequence thereof is that only relatively large and costly rollers can be equipped with such an arrangement, which is, in practice, very advantageous.

The main purpose of the present invention is to provide an extremely simple and low-priced converting arrangement enabling rapid and smooth road transportation of preferably relatively small rollers, of which there is a very clear nominal majority in the market. Characteristic for the invention is the fact that both the operations of reducing the overall width of the roller and raising it on transport wheels take place at one and the same instant, inasmuch as the wheels are secured at such points of the roller that they are pressed down towards the ground and raise the roller when the outer ends of the roller sections are moved towards the vertical centre plane of the roller.

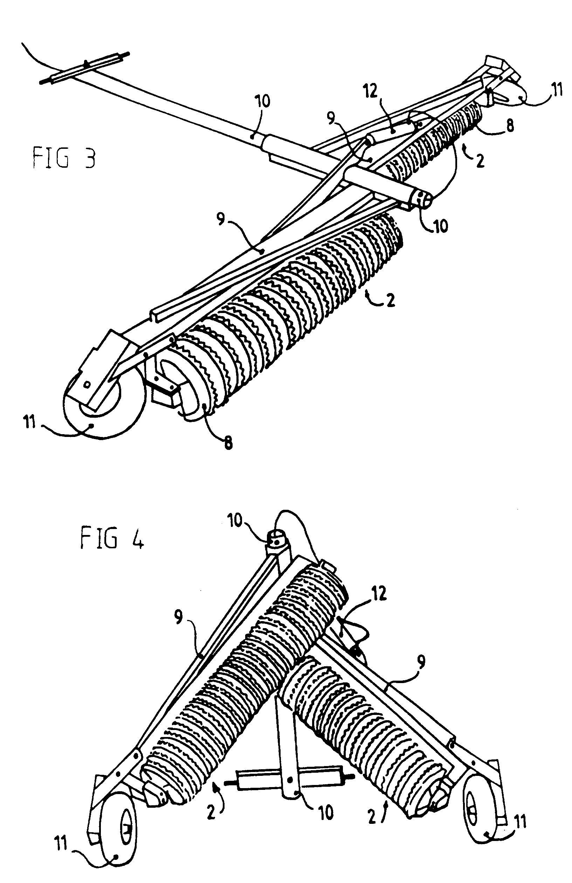

The invention is described in greater detail with reference to an embodiment in which the roller, Fig. 3, is subdivided into two roller sections (2), each of which is secured within its respective frame part (9). The two frame parts are then flexibly joined with one another by mounting on a joint torsional shaft (10) consisting of a round tube which also acts as a drawbar leading to the tractor. The converting arrangement itself is limited to a wheel (11) secured in the outer edge of each frame part, said wheel being, in the working position of the roller, inclined towards the level of the ground and substantially beyond the outer edge of the roller section, with a certain clearance above the surface of the ground, and to a thrusting hydraulic cylinder (12) so arranged as to press the outer ends of the roller sections downward and inward towards the centre. At this point it should be specially noted that no technical arrangement for raising the roller on wheels is provided, apart from that which is common with the arrangement for reducing the overall width, except for the wheels as such and their securing legs. The arrangement described has been tested in practice under different conditions and has been shown to work exceedingly well. Since the hydraulic cylinder is actuated while the roller is drawn forward, the outer ends of the roller sections are pressed down towards the ground and the centre is raised, whereby the outermost cast-iron rings (8) come to act as provisional wheels until the wheels intended for transportation grip the ground and begin to support the implement. Fully converted for transportation, the roller sections assume the form of an A (seen from the rear), Fig. 4, where the camber angles of the wheels are correct since the inclination towards the ground in the working position has been correctly designed. The conversion from the transport position to the working position is brought about by driving the roller forward and as a result of oil draining from the hydraulic cylinder. The fact that the latter conversion is brought about only with the aid of the force of gravity and, accordingly, enables the use of altogether only one single-acting hydraulic cylinder, is from the market point of view virtually invaluable, since the tractors actually available for the implement concerned are frequently of relatively old type, enabling only the take-off of a single-acting oil flow. With all previously known converting arrangements several single-acting cylinders or one double-acting cylinder are required, as a result of which costly conversions of the relatively old tractors have to be carried out.

Furthermore, the dead weight of the converting arrangement described is distributed in a substantially even manner over the entire working width of the roller, which is a great advantage compared with earlier solutions, which often entail a concentration towards the centre.

It may also be noted that the wheels of the roller described can be folded manually upward and inward, while the roller stands in its working position. This has the purpose of avoiding collision with solid obstacles. The arrangement described can, of course, be varied within the scope of the patent claims. Without departing from the inventive idea, it is, for instance, possible to make the wheel mountings in the example pivotable, whereby stationary conversion is enabled inasmuch as during the conversion stage the wheels assume positions transverse to the direction of driving. The distortion towards the ground, transversely to the direction of driving, undergone in that case by the outermost cast-iron rings, does not, in most practical cases, constitute any decisive disadvantage.

Another alternative embodiment of the invention is achieved by arranging the wheel substantially within the inner edges of the roller sections, while replacing the thrusting hydraulic cylinder by a traction cylinder, whereby the outer ends of the roller sections pivot upward and assume the form of a V (seen from the rear) when the implement is converted to the transport position. Furthermore, a roller provided with an arrangement according to the invention can be coupled with the standard so-called three-point linkage of the tractor, whereby the connection between the roller and the tractor becomes so rigid that only one transport wheel is required (the tractor balancing the roller in the transport position). In such a case it is most advisable to subdivide the roller into two roller sections and to pivot only the outer end of one of the sections upward so as to form an L (seen from the rear) when the implement is converted to the transport position.

## Claims

1. Arrangement for converting a tractor-drawn roller for compacting ground in agriculture from its working position to a position more suitable for rapid transportation on roads, and for reconverting said roller to the working position, whereby the roller (Fig. 3) is subdivided into two or several roller sections (2), which, via their respective frame parts (9), are in such flexible relation to one another as to enable the overall width of the roller to be considerably reduced for transportation on roads, inasmuch as at least one frame part (9) with the corresponding roller section (2) is pivoted so that its outer end moves inward towards the vertical centre plane of the roller, **characterised in that** said pivoting movement has, over and above the width-reducing function described, another function, i.e. to raise the roller on transport wheels (11), which is achieved by at least one pivoting frame section (9) as described above comprising at least one wheel (11) so placed at one end of the pivoting frame part as to cause it to move downwards and to raise the roller, when the frame part carries out said pivoting movement.

2. Arrangement according to claim 1, **characterised in that** during the conversion phases the tractor draws the roller forward or pushes it backward and in that in that case certain cast iron rings (e.g. 8) serve as provisional wheels.

3. Arrangement according to claim 1 or 2, **characterised in that** the wheel concerned (11) is secured subject, in the working position of the roller sections, to such an inclination towards the level of the ground as to be, in the position fully converted for transportation, substantially vertical (correct camber angle).

4. Arrangement according to claim 1, **characterised in that** the conversion from the working position to the transport position is brought about by the outer ends of the roller sections being pressed downward towards the ground and the inner ends raised from the ground.

5. Arrangement according to claim 4, **characterised in that** pivot axle (10), which is common to the frame parts (9), consists in a round tube, which also serves as a draw bar leading to the tractor.

## Patentansprüche

1. Anordnung zum Umstellen einer von einem Schlepper gezogenen Walze zur Bodenverdichtung in der Landwirtschaft von ihrer Arbeitsposition in eine für den schnellen Transport auf Straßen geeigneteren Position sowie zur Rückstellung dieser Walze in die Arbeitsposition, wobei die Walze (Abb. 3) in zwei oder mehrere Walzenabschnitte (2) unterteilt ist, die über ihre jeweiligen Rahmenteile (9) in einer so flexiblen Beziehung zueinander stehen, daß die Gesamtbreite der Walze für den Transport auf Straßen beträchtlich verringert werden kann, insoweit als mindestens ein Rahmenteil (9) mit dem entsprechenden Walzenabschnitt (2) drehbar gelagert ist, so daß sein äußeres Ende sich nach innen zur vertikalen Mittelebene der Walze bewegt, **dadurch gekennzeichnet**, **daß** die besagte Drehbewegung neben der beschriebenen breitereduzierenden Funktion eine weitere Funktion hat, und zwar die Walze auf Transporträder (11) zu heben, was erreicht wird durch mindestens einen drehbaren Rahmenabschnitt (9) wie oben beschrieben, der mindestens ein Rad (11) umfaßt, das so an einem Ende des drehbaren Rahmenteils angeordnet ist, daß es sich nach unten bewegt und die Walze anhebt, wenn der Rahmenteil die besagte Drehbewegung ausführt.

2. Anordnung gemäß Anspruch 1, **dadurch gekennzeichnet**, **daß** der Schlepper während der Umstellphasen die Walze nach vorne zieht oder nach hinten schiebt und daß in diesem Fall bestimmte Gußeisenringe (z.B. 8) als provisorische Räder dienen.

3. Anordnung gemäß Anspruch 1 oder 2, **dadurch gekennzeichnet** **daß** das betreffende Rad (11) in der Arbeitsposition der Walzenabschnitte in einer solchen Neigung zum Bodenniveau befestigt ist, daß es in der für den Transport voll umgestellten Position im wesentlichen vertikal steht (korrekter Radsturzwinkel).

4. Anordnung gemäß Anspruch 1, **dadurch gekennzeichnet**, **daß** die Umstellung von der Arbeitsposition in die Transportposition bewerkstelligt wird, indem die äußeren Enden der Walzenabschnitte nach unten zum Boden gedrückt werden und die inneren Enden vom Boden angehoben werden.

5. Anordnung gemäß Anspruch 4, **dadurch gekennzeichnet**, **daß** die gemeinsame Drehachse (10) der Rahmenteile (9) aus einem runden Rohr besteht, das auch als Deichsel dient, die zum Schlepper führt.

## Revendications

1. Dispositif permettant de faire passer un rouleau compacteur agricole attelé à un tracteur de sa position de travail à une position mieux appropriée pour son transport rapide sur route, et pour le ramener ensuite en position de travail. Ce dispositif consiste à diviser le rouleau (fig. 3) en deux ou plusieurs sections (2) assemblées entre elles par l'intermédiaire de leur bâti (9) de manière suffisamment flexible pour permettre de réduire considérablement la largeur hors tout du rouleau pour son transport sur route. L'une au moins des sections du bâti (9), ainsi que la section de rouleau correspondante (2), pivote de telle sorte que son extrémité extérieure se rapproche du plan vertical central du rouleau, avec pour caractéristique que le mouvement de pivotement concerné a une autre fonction en plus de celle consistant à réduire la largeur du rouleau, à savoir relever le rouleau sur ses roues de transport (11), cela étant obtenu par pivotement d'au moins une section de bâti (9) tel que décrit plus haut, avec en plus au moins une roue (11) placée à l'une des extrémités de cette section pour la faire descendre et relever le rouleau lorsque la section concernée effectue le dit mouvement de pivotement.

2. Dispositif satisfaisant au critère 1, caractérisé par le fait que pendant la phase de passage du rouleau de position de travail en position de transport, le tracteur tire le rouleau en avant ou le repousse en arrière, avec dans ce cas l'utilisation de cercles en fonte (8 par exemple) comme roues provisoires.

3. Dispositif satisfaisant au critère 1 ou 2, caractérisé par le fait que la roue concernée (11) est fixée, lorsque les sections du rouleau sont en position de travail, selon une inclinaison telle par rapport au niveau du sol que, lorsque le rouleau est ensuite en position de transport, elle soit pratiquement verticale (angle de carrossage correct).

4. Dispositif satisfaisant au critère 1, caractérisé par le fait que le passage de la position de travail à la position de transport est obtenu par déplacement des extrémités extérieures des sections du rouleau vers le bas et de leurs extrémités intérieures vers le haut.

5. Dispositif satisfaisant au critère 4, caractérisé par le fait que l'axe de pivotement (10) commun aux sections du bâti (9) consiste en un tube de section circulaire faisant également office de barre d'attelage pour le remorquage du rouleau par le tracteur.
